# EUROPEAN PATENT APPLICATION

(11) **EP 1 227 395 A2**
(43) Date of publication of application: **31.07.2002**
(21) Application number: 02000103.8
(22) Date of filing: 02.01.2002
(51) Int. Cl.: G06F 9/445

(54) **Method for dynamic function loading in spreadsheets on small devices**

(30) Priority: 02.01.2001 US 754415
(71) Applicant: SUN MICROSYSTEMS, INC., Palo Alto, California 94303 (US)
(72) Inventor: RANK, Paul J., San Jose, California 95124 (US)
(74) Representative: HOFFMANN - EITLE

(57) **Abstract**

The present invention provides a method for dynamic function loading in spreadsheets on small devices. In one or more embodiments, the present invention allows users to dynamically change the composition of a spreadsheet application by including only the functions they need or desire. This streamlining operation optimizes the limited amount of memory that is so critical to the operating speed and performance of PDAs. According to one embodiment, the present invention dynamically customizes and updates functions of spreadsheet applications. In another embodiment, the present invention presents users with an interface. Using the interface, users can immediately view a list of all the available functions and features. Then users can select and update which functions and features they need for a particular assignment to install into their PDAs. Consequently, the invention optimizes critical PDA memory by providing users with the capability of customizing their spreadsheet applications.

## Description

### BACKGROUND

### Field OF THE INVENTION

This invention relates to the field of computer hardware and software, and in particular to a method for integrating dynamic function loading in spreadsheets on small devices.

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all rights whatsoever.

### BACKGROUND ART

Personal Digital Assistants (PDAs) are small hand-held computers that perform numerous tasks and functions. PDAs are versatile devices that users carry and operate almost anywhere. Despite all of their advantages, a major limitation of PDAs is that they possess a limited amount of computer memory. Therefore, when users want to use memory intensive applications, such as a spreadsheet program, they encounter problems.

Due to PDA memory constraints, sometimes users remove other non-related programs on their PDAs to compensate for memory shortages created by operating PDA spreadsheet applications. Thus, when users remove other non-related programs, it limits the versatility of their PDAs to operate other software applications. These problems and others associated with current PDA systems, relating to storage, editing, display, and performance, are better understood by a more detailed review.

### PDA

A personal digital assistant is a small computer-like device, which typically has a base housing, an input mechanism, and a miniature display screen. The typical configuration of the PDA mounts these components on the topside of the device. The base housing of the PDA contains a small microprocessor, limited data storage and memory areas, a storage battery, and other various miniature electronic components. The electronic components and other features vary depending on the particular model and manufacturer of the PDA.

The input mechanisms of some PDAs utilize a miniature keyboard. Alternatively, the miniature display screen mounted on the PDA is able to operate as an input mechanism. When acting as an input mechanism, the display screen uses a pen-like stylus or other writing implement to introduce input via the display screen. The display assembly senses the position of the tip of the stylus on the viewing screen and provides this positional information to the central processing unit of the PDA. In addition to sensing motion commands, some display assemblies can also sense varying degrees of pressure that the stylus places on the screen of the PDA.

On the other hand, the display screen is also able to operate as an output mechanism. The output of the PDA has many forms. For example, one form of visual output includes graphic and/or textual images that the PDA presents to the user on the display screen. Another form of output is in the form of sound that the PDA provides to the user through a speaker. Additionally, some PDAs can package information for output through cable or wireless networks.

Conventional PDAs also contain an operating system and preloaded programs, such as spreadsheet, e-mail, calendar, memo list, stylus pen applications, and other related applications. The increasing popularity of PDAs stems from their relatively low cost and extreme portability compared to much larger desktop general purpose computers ("desktop computers"). Many users find that for simple computing tasks during trips and other periods of being away from their larger computers, the bulk and computing power of even a compact notebook computer are simply not needed.

### PDA SPREADSHEET PROBLEMS: STORAGE

To encapsulate all of this functionality into such a small device, trade-offs invariably occur. One trade-off is that PDAs do not have the capacity to house much memory. Computer memory is a critical component that directly impacts the processing speed and performance of the PDA. Furthermore, PDA memory is necessary to store data and instructions that a running computer program utilizes. Multi-functional and complex software applications, such as spreadsheet programs, require large amounts of memory to operate. As such, computer programs running on PDAs are limited in the functionality they can provide to a user by the amount of memory available.

A spreadsheet application requires a lot of memory to store individual documents, and sometimes the application can get very large if it supports a lot of features like adding pictures, clip art galleries, help menus, font galleries, or files with different formats to a spreadsheet document. In addition, a spreadsheet program places a heavy demand on PDA memory when the spreadsheet document uses all of its intended features. Consequently, users encounter problems when they need to store spreadsheet documents, commonly referred to as files, that contain many of these attributes.

A file is a collection of bytes stored as an individual entity. All data on disk is stored as a file with a corresponding assigned file name that is unique within the directory it resides. To a desktop computer, a file is nothing more than a string of bytes. However, the particular structure of a file is recognized by the software application that manipulates it. For example, spreadsheet and database files are commonly composed of a series of records, whereas, word processing files typically contain a continuous flow of text.

Spreadsheet files usually possess some formulas that use functions. Functions are typically stored with other related functions ("function packages") in libraries, or can be contained in the spreadsheet application itself. An example of a function package is the statistical function package, which may include such functions as mean, median, and mode. Other examples of function packages include trigonometric, matrix, statistical, financial, scientific, and mathematical function packages. The types and amount of functionality contained within a file depend on what users are attempting to accomplish with their assignment.

Some basic spreadsheet files may only contain a single formula using few (or none) functions. On the other hand, some complex files may contain numerous formulas consisting of many functions, subsets of function packages, and/or entire function packages. Present PDA systems include a fixed set of function packages in the spreadsheet application. However, this process of including all function packages is very memory intensive. Furthermore, users may not need every available spreadsheet function for each of their files.

Numerous blocks, commonly referred to as cells, are located within each individual spreadsheet file. The cells display and process data, and occupy numerous columns and rows depending on the users' requirements. Additionally, the cells may vary in size based on user preferences. Cells are multi-tasked in that they can display and process data. In one embodiment of their versatility, cells simply display text, such as a sentence or title to a column header. In another more complex embodiment, a cell may contain functions or variables that process information within the cell depending on the input the cell receives from users.

In one embodiment of the present invention, databases on a PDA utilize a record based storage medium. In other words, a PDA uses numerous records to store all of the information within an individual spreadsheet document. A record is essentially a group of related fields that store data about a subject or activity. Collections of records make up a representation of a file. In one embodiment, a record represents each spreadsheet cell and rewrites the data of each cell into a file.

### SUMMARY OF THE INVENTION

It is an object of the invention to improve the efficiency of the utilization of memory in a small device.

This object of the invention is solved by a method for downloading a file to a PDA comprising: determining a subset of functions from a set of functions that may be associated with said file; and dynamically downloading said file and only said subset of functions to said PDA. Accordingly, it can be avoided to allocate resources of the PDA for not needed or unused functions.

Advantageously, the step of determining said subset of functions may further comprise obtaining said subset based on a user preference.

Further, the step of determining said subset of functions may comprise obtaining said subset comprising a family of functions.

The step of determining said subset of functions may comprise displaying said subset of functions as a list.

Moreover, the step of determining said subset of functions may further comprise using said family to recognize one or more additional functions automatically.

The user may be prompted to select said one or more additional functions. The family may comprise at least one of mathematical, trigonometric, statistical, mathematical, financial, and scientific functions.

The step of dynamically downloading said file and said subset of functions may further comprise prompting a user to choose whether to download said file and/or said subset.

The object of the invention is further solved by a computer program product comprising: a computer usable medium having computer readable program code embodied therein configured to integrate dynamic function loading in spreadsheets on small devices, said computer program product comprising: computer readable code configured to cause a computer to determine a subset of functions from a set of functions that may be associated with said file; and computer readable code configured to cause a computer to dynamically download said file and only said subset of functions to said PDA.

A program may be provided having instructions adapted to make a computer carry out at least one of the above operations. A computer readable medium may be provided in which a program is embodied, where the program is to make a computer execute at least one of the above operations.

Moreover, the object of the invention is solved by an interface for downloading a file to a small device comprising: means for determining a subset of functions from a set of functions that may be associated with said file; and means for dynamically downloading said file and only said subset of functions to said small device.

The present invention provides a method for dynamic function loading in spreadsheets on small devices. In one or more embodiments, the present invention allows users to dynamically change the composition of a spreadsheet application by including only the functions they need or desire. This streamlining operation optimizes the limited amount of memory that is so critical to the operating speed and performance of PDAs.

According to one embodiment, the present invention dynamically customizes and updates functions of spreadsheet applications. The dynamic function loading mechanism may use a series of algorithms to identify related groups of functions.

In another embodiment, the present invention presents users with an interface. Using the interface, users can immediately view a list of all the available functions and features. Then users can select and update which functions and features they need for a particular assignment to install onto their PDAs. Consequently, in this embodiment the invention may optimize critical PDA memory by providing users with the capability of customizing their spreadsheet applications.

### BRIEF DESCRIPTION OF THE DRAWINGS

These and other features, aspects and advantages of the present invention will become better understood with regard to the following description, appended claims and accompanying drawings where:
- Fig. 1: is an illustration of one embodiment of a personal digital assistant.
- Fig. 2: is a flowchart showing how to integrate dynamic function loading in spreadsheets on small devices according to one embodiment of the present invention.
- Fig. 3: is a flowchart showing how to download spreadsheet functions on small devices according to one embodiment of the present invention.
- Fig. 4: is a flowchart showing how to determine which functions a user needs according to one embodiment of the present invention.
- Fig. 5: is a flowchart showing how to integrate dynamic function loading in spreadsheets on small devices driven from a desktop computer according to another embodiment of the present invention.
- Fig. 6: is a flowchart showing how to integrate dynamic function loading in spreadsheets on small devices driven from a desktop computer according to an embodiment of the present invention.
- Fig. 7: is an illustration of the embodiment of a personal digital assistant of Figure 1 coupled with a desktop computer.
- Fig. 8: is a flowchart showing how to integrate dynamic function support into spreadsheets on small devices driven from a desktop computer to a PDA according to one embodiment of the present invention.
- Fig. 9: is an illustration of an embodiment of a computer execution environment.

### DETAILED DESCRIPTION

An interface for dynamic function loading in spreadsheets on small devices is described. In the following description, numerous specific details are set forth in order to provide a more detailed description of the invention. It will be apparent, however, to one skilled in the art, that the present invention may be practiced without these specific details. In other instances, well known details have not been provided so as to not unnecessarily obscure the invention.

One or more embodiments of the present invention provide dynamic function loading in spreadsheet programs on PDAs. PDAs are small devices that users can operate almost anywhere. Yet, due to their size, PDAs only contain a limited amount of memory. This limitation is demonstrated when users operate programs that use large amounts of memory, such as spreadsheet applications.

An advantage is created by the present invention because it customizes spreadsheet programs for each user and file while minimizing the amount of memory required by a PDA. To reduce the amount of PDA memory constraints, users are able to select which features they need. This selection allows users to limit the amount of memory required by a spreadsheet application. Furthermore, since required spreadsheet functions ("desired functions") sometimes change with different projects, the present invention provides users with a dynamic function loading system for spreadsheet applications. In addition, the present invention operates with a user-friendly interface that provides users with tools to upload necessary functions for specific projects.

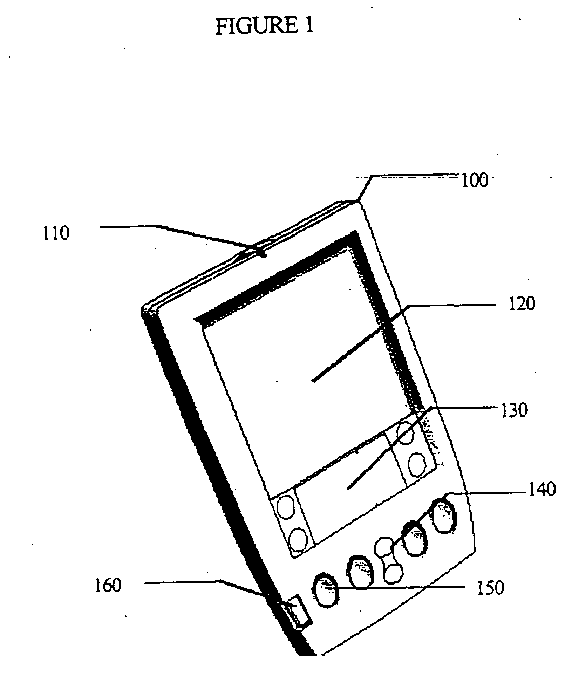

Figure 1 is an illustration of one embodiment of a small device computer system. The small device computer system shown in Figure 1 at 100 is an embodiment of a personal digital assistant (PDA). However, it will be apparent to one with ordinary skill in the art that the present invention can be used with any suitable spreadsheet software application on any suitable small device computer system. PDA 100 has a base housing 110 usually with input mechanisms mounted on its topside, and a miniature display screen 120 for output. The output may take the form of graphic and/or textual images presented to the user on the display screen. In addition, the output may be presented in the form of sound.

PDA 100 can be activated and de-activated, for instance, by accessing power button 160. The input mechanism may be, for example, a miniature keyboard (not shown). Alternatively, the display screen 120 may act as both an input and output mechanism with a pen-like stylus or other writing implement (not shown) used to introduce input by way of the screen 120. With reference to Figure 1, bottom portion 130 of display screen 120 is the location where the pen-like stylus would introduce user input. Shown in Figure 1 are additional mechanisms for user input as well, including a scroll button 140 and an application button 150. A small microprocessor, limited data storage and memory areas, and a storage battery are typically mounted within the base housing 110 of the PDA along with various other miniature electronic components and ports.

### CONDUITS

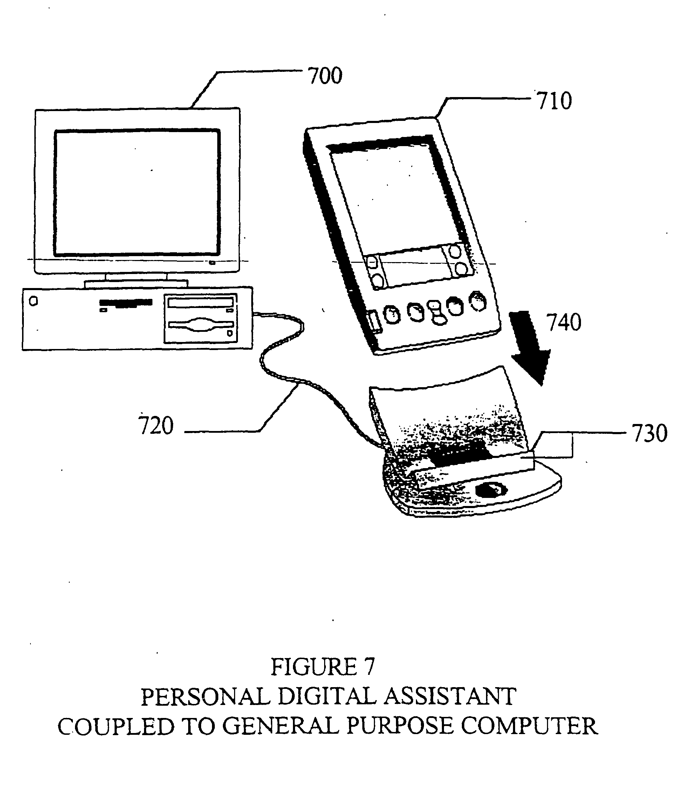

Figure 7 is an illustration of one embodiment of a personal digital assistant used in the present invention coupled with a desktop computer. Figure 7 is designed to generally indicate how a user transfers data from a desktop computer 700 to a PDA 710, or vice versa. Desktop computer 700 is coupled to PDA carriage 730 via a connecting line 720. The connecting line 720 represents a physical connection.

The physical connection provides a two-way data communication coupling via a desktop computer 700 to a PDA 710. Although, physical connection 720 represents a cable connection, it will be apparent to one skilled in the art, that the present invention may be practiced with numerous types of connections. For example, if the physical connection is an integrated services digital network (ISDN) card or a modem, the physical connection provides a data communication connection to the corresponding type of telephone line. Additionally, wireless links are available to the present invention. In any such implementation, the physical connection sends and receives electrical, electromagnetic or optical signals, which carry digital data streams representing various types of information. In some implementations, computer software also termed conduits control the data streams through the physical connection. In other words, the conduit can be both a physical connection like a cable wire, or a software program that controls the data stream between the desktop and the PDA.

In operation, a user would insert PDA 710 into carriage 730 in the direction generally indicated by the black arrow 740. Thereafter, data is passed bi-directionally across physical connection 720 via a conduit to achieve the result of either transferring the user's data from PDA 710 to desktop computer 700, or vice versa.

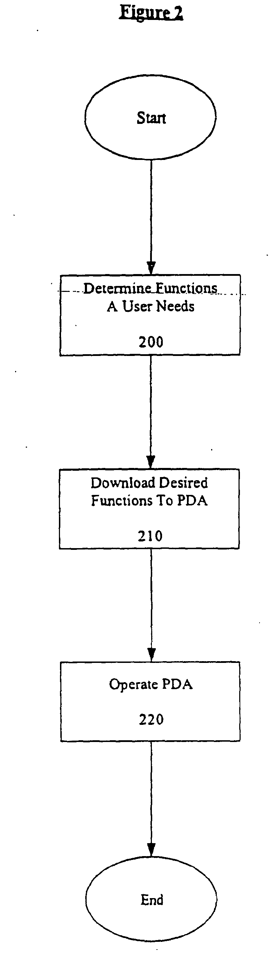

One embodiment of the invention operates generally in accordance with Figure 2, which is a flow chart for integrating dynamic function loading in spreadsheets on small devices when the spreadsheet data file is transferred from the desktop to the PDA. First, at step 200, functions needed by a user are determined. If it is determined that the user does not have the desired functions on the handheld device, the user is given an option to download the desired functions to the PDA. For example, downloaded functions can be entire function packages, subsets of function packages, or individual functions used in the spreadsheet. Next, at step 210, the user's desired functions are downloaded to the PDA. Next, at step 220 the spreadsheet file is downloaded from the desktop to the PDA. Finally, at step 230, the user operates the spreadsheet application on the PDA with the downloaded functions.

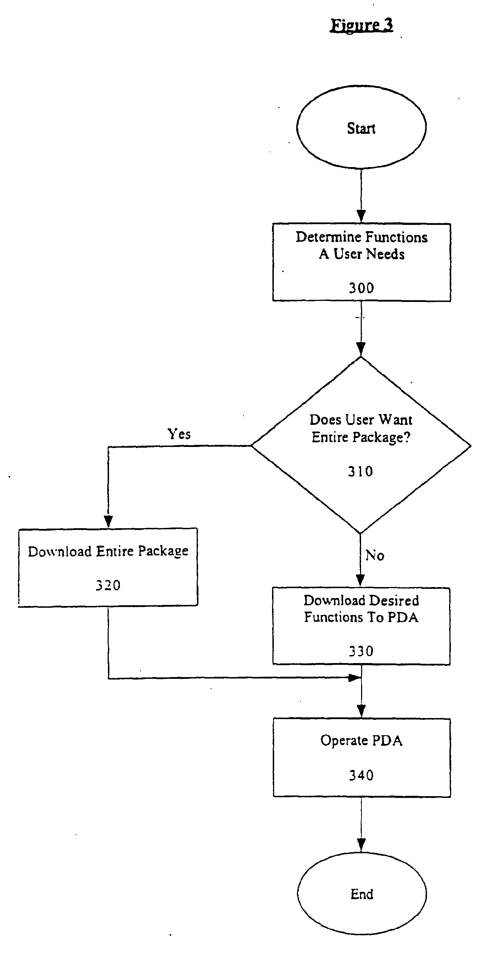

A function package refers to a plurality of functions that are similar. As previously discussed, a spreadsheet application may utilize a plurality of packages. Sometimes it is beneficial to not only restrict the PDA to a subset of the functions, but also a subset of the packages or only to some of the functions within a selected package. One embodiment of the invention (shown in Figure 3) provides the ability to download certain subsets of functions and/or packages selectively.

Figure 3 is a flowchart showing how to download spreadsheet functions on small devices according to one embodiment of the present invention. At step 300, functions needed by a user is determined. Next, at step 310, the user's input is analyzed to determine whether the user wants the entire function package. If the user wants the entire function package, at step 320, the entire function package is downloaded into the user's PDA. If the user does not want the entire function package, at step 330, only the user's desired individual functions are downloaded into the user's PDA. After either case 320 or 330, the spreadsheet file is downloaded from the desktop to the PDA at step 340. Finally, at step 350, the user operates the spreadsheet application on the PDA with the downloaded functions.

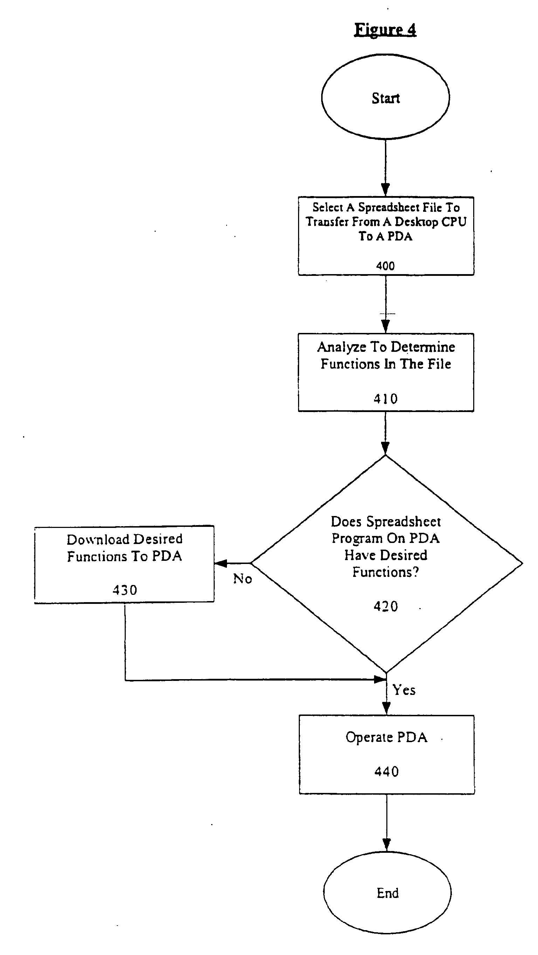

To operate efficiently, the invention must determine what functions the user needs. For instance, a spreadsheet that is using a logarithmic function for a calculation must have the logarithmic function. Figure 4 is a flowchart showing how to determine which functions a user needs according to one embodiment of the present invention. First, at step 400, the user selects a spreadsheet file from a desktop computer to download to a PDA. Next, at step 410, the selected file is examined for the types of functions and formulas it contains. Next, at step 420, it is determined whether the spreadsheet program on the PDA has the user's desired functions. If the spreadsheet program has the user's desired functions, at step 440, the user first downloads the spreadsheet file from the desktop to the PDA before operating the spreadsheet application on the PDA with the available functions at step 450. If the spreadsheet program does not have the user's desired functions, at step 430, the desired functions are downloaded to the PDA before downloading the spreadsheet file from the desktop to the PDA at step 440. Finally, at step 450, the user operates the spreadsheet application on the PDA with the downloaded functions.

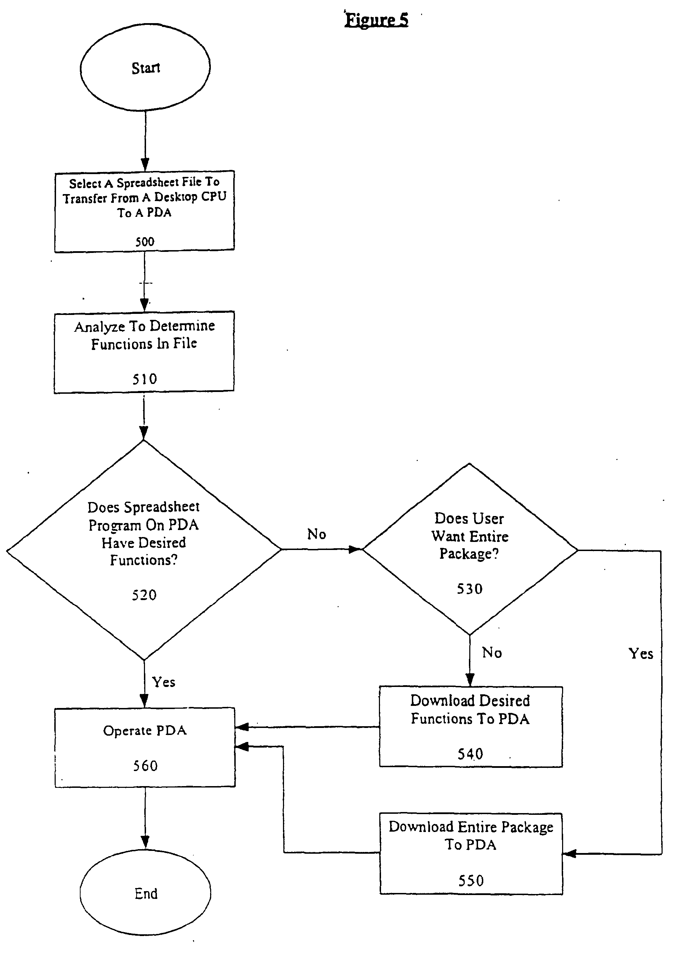

Figure 5 is a flowchart showing how to integrate dynamic function loading in spreadsheets on small devices driven from a desktop computer according to another embodiment of the present invention. First, at step 500, the user selects a spreadsheet file from a desktop computer to download to a PDA. Next, at step 510, the selected spreadsheet is examined for the types of functions and formulas it contains. Next, at step 520, it is determined whether the spreadsheet program on the PDA has the user's desired functions. If the spreadsheet program has the user's desired functions, at step 570, the user operates the spreadsheet application on the PDA with the available functions after downloading the spreadsheet file from the desktop to the PDA at step 560. If the spreadsheet program does not have the user's desired functions, at step 530, the user's input is analyzed to determine whether the user wants the entire function package. If the user wants the entire function package, at step 550, the entire function package is downloaded into the user's PDA. If the user does not want the entire function package, at step 540, only the user's desired functions are downloaded into the user's PDA. After either step 540 or 550 the spreadsheet file is downloaded from the desktop to the PDA at step 560. Finally, at step 570, the user operates the spreadsheet application on the PDA with the downloaded functions.

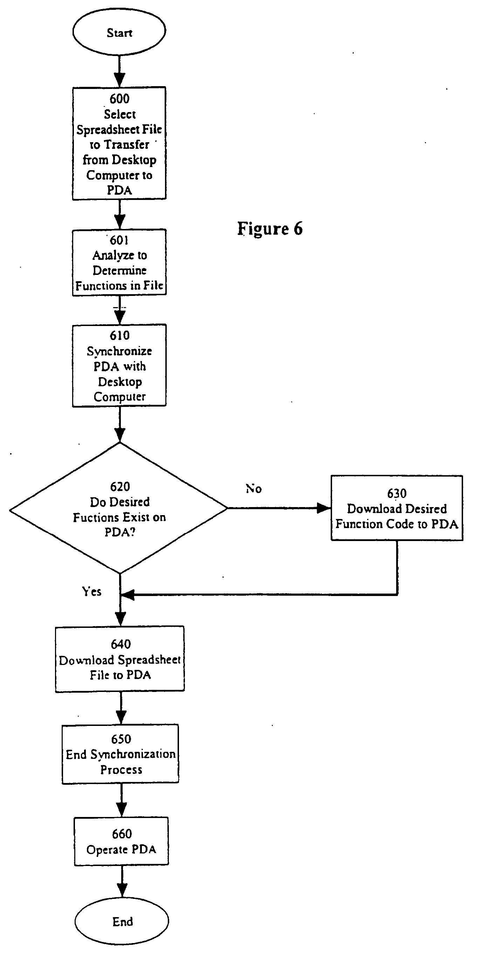

Figure 6 is a flowchart showing how to integrate dynamic function loading in spreadsheets on small devices like a PDA driven from a desktop computer according to an embodiment of the present invention. First, at step 600, the user selects a spreadsheet file from a desktop computer to download to a PDA. Next, at step 601, the formulas in the selected spreadsheet are examined for the types of functions it contains. The spreadsheet program on a PDA may include and display a list of all of the available functions on the device. However, the spreadsheet program on the PDA only contains computer code for a limited number of these functions. Nevertheless, the user can build numerous formulas on the PDA using the limited functions.

The formulas that a users builds are not evaluated until the code for executing the functions become available on the PDA. This is enabled but not performed, at step 610, when the user connects the PDA to a desktop computer. Currently, a PDA spreadsheet program cannot evaluate formulas containing functions that are not currently loaded on the PDA until the PDA is synchronized with the desktop computer. During the synchronization process, the matching computer code of the functions needed by the user's formula are transferred from the desktop computer to the PDA. However, one skilled in the art will know that the present invention and synchronization process can be practiced with any suitable computer system that contains the appropriate functions.

Next, at step 620, it is determined whether the spreadsheet program on the PDA has a user's desired functions. If the spreadsheet program has a user's desired functions, at step 640, the spreadsheet file is downloaded from the desktop to the PDA before the user ends the synchronization process with the desktop computer at step 650. If the spreadsheet program does not have the user's desired functions, at step 630, the matching code for these functions is downloaded from the desktop computer to the PDA before downloading the spreadsheet file from the desktop to the PDA at step 640, and ending the synchronization process at step 650. Finally, at step 660, the user operates the spreadsheet application on the PDA with the available functions. It should be noted that the evaluation of the desired formulas may take place before the synchronization process is ended at step 650, or while operating the PDA at step 660.

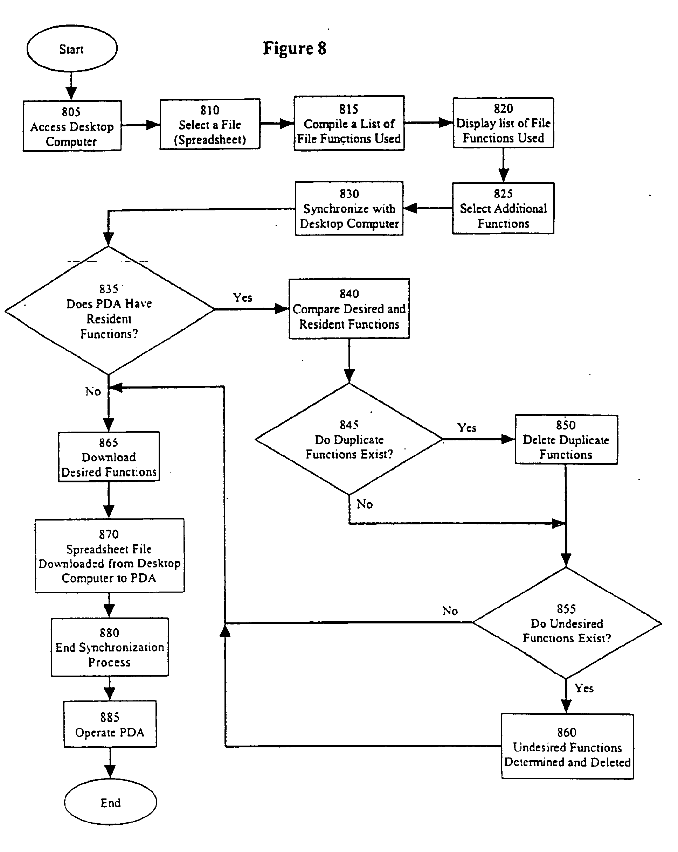

Figure 8 is a flowchart showing how to integrate dynamic function support into spreadsheets on small devices. Figure 8 is an illustration of one embodiment of the present invention driven from a desktop computer to a PDA. First, at step 805, a user accesses a desktop computer and activates a spreadsheet application. A spreadsheet application contains numerous documents that are commonly referred to as files. A file is a single spreadsheet document that usually possesses some functionality. The types of formulas contained within a file depend on what users are trying to achieve with their particular project. Some files only contain a single formula that may consist of several functions. However, some complex files may contain many formulas that contain numerous functions or subsets of functions. The combination of different functions used within a file frequently change as users continue to develop their project or additional requirements arise.

At step 810, the user selects a file from the spreadsheet application that contains the formulas consisting of functions he or she wants to transfer to a PDA. At step 815, all the functions used by the selected file are determined. All of the functions used by a particular file, which are either contained in a library, or the spreadsheet application, are referred to as "file functions". At step 820, all the file functions for each file within the spreadsheet application are displayed. In one embodiment of the display format, the file functions are listed after each file so users can review and select which files contain the functions they want to transfer ("desired functions"). Next, at step 825, the user may select additional functions to transfer by selecting another file from the displayed list.

At step 830, the user connects and synchronizes the PDA to the desktop computer. This step is described in greater detail in Figure 7. In one embodiment of a synchronization process used in the present invention, essentially, the user inserts the PDA 710 into a carriage 730 that is connected with the desktop computer. The synchronization process allows data to be transferred from the desktop computer to the PDA, or vice versa. Next, at step 835, it is determined whether the PDA has any file functions already resident on the PDA ("resident functions"). If the PDA does not possess any resident functions, at step 865, the desired functions are downloaded to the user's PDA. However, if the PDA does contain resident functions, at step 840, the desired functions are compared with the resident functions.

At step 845, it is determined whether any duplicate functions exist between the desired functions and the resident functions. If duplicate functions exist, at step 850, one set of the duplicate functions is deleted. This step saves valuable PDA memory because it avoids transferring the same functions. There can be resident functions on the PDA that are not being used by other spreadsheet files, and this is checked at step 855. If no undesired functions exist, then we download the desired functions, at step 865, and add the functions to the list of resident functions already on the PDA. If on the other hand there are no other spreadsheet files which are using the resident functions, then at step 860 the undesired resident functions are determined and deleted (the deletion of undesired functions may be accomplished by an user interface where the user approves functions to be deleted) before going on to step 865 where the desired functions are downloaded. Next, at step 870, the spreadsheet file is downloaded from the desktop to the PDA. Next, at step 880, the user ends the synchronization process with the desktop computer. Finally, at step 885, the user operates the spreadsheet application on the PDA with the available functions.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

A program may be provided having instructions adapted to make a computer carry out at least one of the above operations and a computer readable medium may be provided in which a program is embodied, where the program is to make a computer execute at least one of the above operations.

According to another embodiment, an interface for downloading a file to a small device may be provided comprising means for determining a subset of functions from a set of functions that may be associated with said file; and means for dynamically downloading said file and only said subset of functions to said small device. Accordingly, it can be avoided to allocate resources of the PDA for not needed or unused functions

For example, functional elements of the interface relating to prompting the user of the small device to input selection information or similar may advantageously be located at the small device, whereas other functional elements of the interface, e.g. relating to determining functions and similar, may be located at another device, e.g. a server.

The small device can be any type of PDA, including hand-held computers, mobile phones, personal communication devices and similar.

The interface may partially of fully be realized in software or hardware, e.g. involving a CPU of the small device. Further, the interface may reside partially or fully a the small device or any other unit, including a server storing the file.

The means for determining said subset of functions may be arranged to obtain said subset based on a user preference. Further, the means for determining said subset of functions may be arranged to obtain said subset comprising a family of functions, and may be arranged to display said subset of functions as a list.

The means for determining said subset of functions may be arranged to use said family to recognize one or more additional functions automatically, and may be arranged to prompt a user to select said one or more additional functions.

The family may comprise at least one of mathematical, trigonometric, statistical, mathematical, financial, and scientific functions.

The means for dynamically downloading said file and said subset of functions may be arranged to prompt a user to choose whether to download said file and/or said subset.

The components of the interface may be arranged at the small device or at a server or the components of the interface are partly arranged at the small device and partly arranged at the server.

### EMBODIMENT OF A COMPUTER EXECUTION ENVIRONMENT

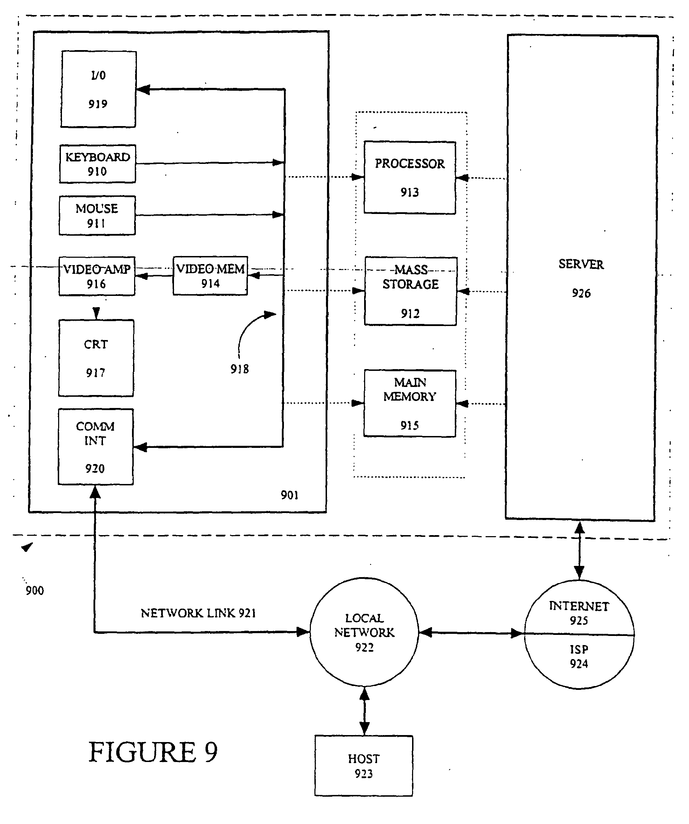

An embodiment of the invention can be implemented as computer software in the form of computer readable code executed in a desktop general purpose computing environment such as environment 900 illustrated in Figure 9, or in the form of bytecode class files running in such an environment. A keyboard 910 and mouse 911 are coupled to a bi-directional system bus 918. The keyboard and mouse are for introducing user input to a computer 901 and communicating that user input to processor 913.

Computer 901 may also include a communication interface 920 coupled to bus 918. Communication interface 920 provides a two-way data communication coupling via a network link 921 to a local network 922. For example, if communication interface 920 is an integrated services digital network (ISDN) card or a modem, communication interface 920 provides a data communication connection to the corresponding type of telephone line, which comprises part of network link 921. If communication interface 920 is a local area network (LAN) card, communication interface 920 provides a data communication connection via network link 921 to a compatible LAN. Wireless links are also possible. In any such implementation, communication interface 920 sends and receives electrical, electromagnetic or optical signals, which carry digital data streams representing various types of information.

Network link 921 typically provides data communication through one or more networks to other data devices. For example, network link 921 may provide a connection through local network 922 to local server computer 923 or to data equipment operated by ISP 924. ISP 924 in turn provides data communication services through the world wide packet data communication network now commonly referred to as the "Internet" 925. Local network 922 and Internet 925 both use electrical, electromagnetic or optical signals, which carry digital data streams. The signals through the various networks and the signals on network link 921 and through communication interface 920, which carry the digital data to and from computer 900, are exemplary forms of carrier waves transporting the information.

Processor 913 may reside wholly on client computer 901 or wholly on server 926 or processor 913 may have its computational power distributed between computer 901 and server 926. In the case where processor 913 resides wholly on server 926, the results of the computations performed by processor 913 are transmitted to computer 901 via Internet 925, Internet Service Provider (ISP) 924, local network 922 and communication interface 920. In this way, computer 901 is able to display the results of the computation to a user in the form of output. Other suitable input devices may be used in addition to, or in place of, the mouse 911 and keyboard 910. I/O (input/output) unit 919 coupled to bi-directional system bus 918 represents such I/O elements as a printer, A/V (audio/video) I/O, etc.

Computer 901 includes a video memory 914, main memory 915 and mass storage 912, all coupled to bi-directional system bus 918 along with keyboard 910, mouse 911 and processor 913.

As with processor 913, in various computing environments, main memory 915 and mass storage 912, can reside wholly on server 926 or computer 901, or they may be distributed between the two. Examples of systems where processor 913, main memory 915, and mass storage 912 are distributed between computer 901 and server 926 include the thin-client computing architecture developed by Sun Microsystems, Inc., handheld computing devices such as personal digital assistants, Internet ready cellular phones, and other Internet computing devices.

The mass storage 912 may include both fixed and removable media, such as magnetic, optical or magnetic optical storage systems or any other available mass storage technology. Bus 918 may contain, for example, thirty-two address lines for addressing video memory 914 or main memory 915. The system bus 918 also includes, for example, a 32-bit data bus for transferring data between and among the components, such as processor 913, main memory 915, video memory 914, and mass storage 912. Alternatively, multiplex data/address lines may be used instead of separate data and address lines.

In one embodiment of the invention, the processor 913 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 915 is comprised of dynamic random access memory (DRAM). Video memory 914 is a dual-ported video random access memory. One port of the video memory 914 is coupled to video amplifier 916. The video amplifier 916 is used to drive the cathode ray tube (CRT) raster monitor 917. Video amplifier 916 is well known in the art and may be implemented by any suitable apparatus. This circuitry converts pixel data stored in video memory 914 to a raster signal suitable for use by monitor 917. Monitor 917 is a type of monitor suitable for displaying graphic images.

Computer 901 can send messages and receive data, including program code, through the network(s), network link 921, and communication interface 920. In the Internet example, remote server computer 926 might transmit a requested code for an application program through Internet 925, ISP 924, local network 922 and communication interface 920. The received code may be executed by processor 913 as it is received, and/or stored in mass storage 912, or other non-volatile storage for later execution. In this manner, computer 900 may obtain application code in the form of a carrier wave. Alternatively, remote server computer 926 may execute applications using processor 913, and utilize mass storage 912, and/or video memory 915. The results of the execution at server 926 are then transmitted through Internet 925, ISP 924, local network 922, and communication interface 920. In this example, computer 901 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Thus, a method for dynamic function loading in spreadsheets on small devices is described in conjunction with one or more specific embodiments. The invention is defined by the claims and their full scope of equivalents.

## Claims

1. A method for downloading a file to a PDA comprising:
determining a subset of functions from a set of functions that may be associated with said file; and
dynamically downloading said file and only said subset of functions to said PDA.

2. The method of claim 1 wherein said determining said subset of functions further comprises:
obtaining said subset based on a user preference.

3. The method of at least one of the claims 1 and 2 wherein said determining said subset of functions further comprises:
obtaining said subset comprising a family of functions.

4. The method of at least one of the claims 1 to 3 wherein said determining said subset of functions further comprises:
displaying said subset of functions as a list.

5. The method of at least one of the claims 3 and 4 wherein said determining said subset of functions further comprises:
using said family to recognize one or more additional functions automatically.

6. The method of claim 5 further comprising:
prompting a user to select said one or more additional functions.

7. The method of at least one of the claims 2 to 6 wherein said family comprises at least one of mathematical,
trigonometric, statistical, mathematical, financial, and scientific functions.

8. The method of at least one of the claims 1 to 7 wherein said dynamically downloading said file and said subset of functions further comprises:
prompting a user to choose whether to download said file and/or said subset.

9. A computer program product comprising:
a computer usable medium having computer readable program code embodied therein configured to integrate dynamic function loading in spreadsheets on small devices, said computer program product comprising:
computer readable code configured to cause a computer to determine a subset of functions from a set of functions that may be associated with said file; and
computer readable code configured to cause a computer to dynamically download said file and only said subset of functions to said PDA.

10. The computer program product of claim 9 wherein said computer readable code configured to cause a computer to determine a subset of functions from a set of functions
that may be associated with said file obtains said subset based on a user preference.

11. The computer program product of at least one of the claims 9 and 10 wherein said computer readable code configured to cause a computer to determine a subset of functions from a set of functions further comprises:
computer readable code configured to cause a computer to obtain said subset comprising a family of functions.

12. The computer program product of at least one of the claims 9 to 11 wherein said computer readable code configured to cause a computer to determine a subset of functions from a set of functions further comprises:
computer readable code configured to cause a computer to display said subset of functions as a list.

13. The computer program product of at least one of the claims 11 and 12 wherein said computer readable code configured to cause a computer to determine a subset of functions from a set of functions further comprises:
computer readable code configured to cause a computer to use said family to recognize one or more additional functions automatically.

14. The computer program product of claim 13 further comprising:
computer readable code configured to cause a computer to prompt a user to select said one or more additional functions.

15. The computer program product of at least one of the claims 11 to 14 wherein said family comprises at least one of mathematical, trigonometric, statistical, mathematical, financial, and scientific functions.

16. The computer program product of at least one of the claims 9 to 15 wherein said computer readable code configured to cause a computer to dynamically download said file and only said subset of functions to said PDA further comprises:
computer readable code configured to cause a computer to prompt a user to choose whether to download said file and/or said subset.

17. A program having instructions adapted to make a computer carry out the method of at least one of the claims 1 - 8.

18. A computer readable medium, in which a program is embodied, where the program is to make a computer execute the method of at least one of the claims 1 - 11.

19. An interface for downloading a file to a small device comprising:
means for determining a subset of functions from a set of functions that may be associated with said file; and
means for dynamically downloading said file and only said subset of functions to said small device.

20. The interface of claim 19 wherein said means for determining said subset of functions is further arranged to obtain said subset based on a user preference.

21. The interface of at least one of the claims 19 and 20 wherein said means for determining said subset of functions is further arranged to obtain said subset comprising a family of functions.

22. The interface of at least one of the claims 19 to 21 wherein said means for determining said subset of functions is further arranged to display said subset of functions as a list.

23. The interface of at least one of the claims 21 and 22 wherein said means for determining said subset of functions is further arranged to use said family to recognize one or more additional functions automatically.

24. The interface of claim 23 further arranged to prompting a user to select said one or more additional functions.

25. The interface of at least one of the claims 21 to 24 wherein said family comprises at least one of mathematical, trigonometric, statistical, mathematical, financial, and scientific functions.

26. The interface of at least one of the claims 19 to 25 wherein said means for dynamically downloading said file and said subset of functions is further arranged to prompt a user to choose whether to download said file and/or said subset.

27. The interface of at least one of the claims 19 to 26 wherein the components of the interface are arranged at the small device or at a server or wherein the components of the interface are partly arranged at the small device and partly arranged at the server.
